# EUROPÄISCHE PATENTSCHRIFT

(11) **EP 3 532 654 B1**
(45) Veröffentlichungstag und Bekanntmachung des Hinweises auf die Patenterteilung: **24.04.2024**
(21) Anmeldenummer: 17791406.6
(22) Anmeldetag: 30.10.2017
(51) Int. Cl.: C25B 1/04, C25B 9/65, C25B 9/75, C25B 9/77, C25B 11/032, C25B 11/052, C25B 11/069

(54) **VERWENDUNG EINER BIPOLARPLATTE UND EINER PORÖSEN TRANSPORTSCHICHT IN EINEM ELEKTROLYSEUR**
USE OF A BIPOLAR PLATE AND OF A POROUS TRANSPORT LAYER IN AN ELECTROLYSER
UTILISATION D'UNE PLAQUE BIPOLAIRE ET D'UNE COUCHE DE TRANSPORT POREUSE DANS UN ÉLECTROLYSEUR

(30) Priorität: 31.10.2016 DE 102016221395
(43) Veröffentlichungstag der Anmeldung: 04.09.2019
(73) Patentinhaber: Fraunhofer-Gesellschaft zur Förderung der angewandten Forschung e.V., 80686 München (DE)
(72) Erfinder: GEORG, Andreas, 79194 Gundelfingen (DE)
(74) Vertreter: Maiwald GmbH
(86) Internationale Anmeldenummer: PCT/EP2017/077771
(87) Internationale Veröffentlichungsnummer: WO 2018/078157

(56) Entgegenhaltungen:
- EP-A1- 2 608 298
- WO-A1-00/22689
- WO-A1-2016/080505
- CA-A1- 2 968 036
- DE-T2- 69 115 213
- US-A- 4 615 775
- US-A1- 2004 247 978

## Beschreibung

### Gegenstand der Erfindung

Die vorliegende Erfindung handelt von der Verwendung einer Bipolarplatte, einer beschichteten porösen Transportschicht und einer Elektrode in einem Elektrolyseur.

### Hintergrund der Erfindung

In elektrochemischen Zellen, wie z.B. einer Brennstoffzelle oder einem Elektrolyseur, werden metallische Platten eingesetzt, die den elektrischen Strom für die gewünschte elektrochemische Reaktion zu- bzw. abführen. Aufgrund der elektrochemischen Spannung unterliegen diese Platten selbst einer elektrochemischen Reaktion, die zu einer Auflösung des Metalls führen kann oder zu einer Bildung einer Oxidschicht oder beidem. Diese Reaktionen sind häufig unerwünscht, da sie die Leistungsfähigkeit der Zelle mindern oder im Extremfall zu einem völligen Versagen führen können. Daher werden häufig Materialien eingesetzt, die überwiegend passivieren, bei denen also die Auflösung durch die Bildung einer Oxidschicht deutlich gemindert wird. Bei Polymerelektrolytbrennstoffzellen (PEM-Brennstoffzellen, mitunter auch als Proton-Austausch-Membran (proton exchange membrane) Brennstoffzelle bezeichnet) wird häufig Edelstahl und für entsprechende PEM-Elektrolyseure Titan eingesetzt. Die sich bildenden Oxidschichten verursachen aber einen hohen Kontaktwiderstand, der das Leistungsvermögen der Zelle mindert. Dieses Problem ergibt sich nicht nur für die in solchen elektrochemischen Zellen eingesetzten Platten, sondern auch für in manchen Systemen auf die Platten aufgesetzten porösen Lagen, die ihrerseits aus einem oxidierbarem Metall bestehen. Bei der PEM-Brennstoffzelle heißen solche Lagen "Gas Diffusion Layer (GDL)", bei der PEM Elektrolyse "Stromverteiler", "current collector" oder "porous transport layer (PTL)". Häufig sind solche Lagen wieder in Einzel-Lagen unterschiedlicher Struktur und Porengröße unterteilt, z.B. in eine, typischerweise der eigentlichen Elektrode, an der die elektrochemische Reaktion stattfindet, zugewandten Lage mit kleiner Porengröße, und einer der Bipolarplatte zugewandten Lage mit großer Porengröße (dann z.B. MPL, "microporous layer", genannt). In der PEM Brennstoffzelle werden häufig kohlenstoff-basierte GDL eingesetzt, dann findet keine solche Passivierung statt.

Neben dem Problem der Passivierung und des damit ansteigenden Kontaktwiderstands wird aber auch die Auflösung mit geringen Raten, bei denen die herausgelösten Ionen eine Beeinträchtigung der Leistungsfähigkeit anderer Komponenten nach sich ziehen, beschrieben. Im Falle der PEM-Elektrolyse oder der PEM Brennstoffzelle sind dies Einlagerungen der Metall-Ionen in die Protonenleitende Membran oder auch eine Beeinträchtigung des KatalysatorMaterials (Jinfeng Wu, Xiao Zi Yuan, Jonathan J. Martin, Haijiang Wang, Jiujun Zhang, Jun Shen, Shaohong Wu,Walter Merida, , A review of PEM fuel cell durability: Degradation mechanisms and mitigation strategies, Journal of Power Sources 184 (2008) 104-119). Eine Vergiftung der Kathode einer Brennstoffzelle durch Freisetzung von flüchtigen Chromverbindungen aus Edelstahl wird auch in Absatz 5 von DE 10 2009 037 206 beschrieben.

Dabei treten je nach System sehr unterschiedliche Korrosionsbedingungen auf. In der Brennstoffzelle sind die sich bildenden elektrochemischen Potentiale mit Werten von typischerweise 0,5 V bis 1 V, deutlich geringer als in Elektrolyseuren wobei in Elektrolyseuren typische Werte 1.5 V bis 3 V betragen. Die thermodynamisch minimale Spannung zur Spaltung von Wasser beträgt unter Standardbedingungen 1.23V. Daher sind viele Materialien, wie sie in der Brennstoffzelle einsetzbar sind (wie z.B. Edelstahl 316L oder auch viele Nitride und Karbide) nicht in einem Elektrolyseur einsetzbar, da sie hier nicht mehr beständig sind. Hierbei stellen jedoch die anodische und die kathodische Elektrode jeweils unterschiedliche Potentiale und damit unterschiedlich korrosive Bedingungen dar.

Dieses Problem wird im Falle von Edelstahlblechen bei PEM-Brennstoffzellen z.B. durch eine Beschichtung mit Gold oder Platin gelöst. Dies ist aber teuer, weshalb vorgeschlagen wurde, nur ausgewählte Flächen zu beschichten (DE 10 2004 056 846).

Aufgrund der höheren Arbeitsspannung von Elektrolyseuren fallen die Beschichtungen in diesen Apparaten in der Regel dicker aus, was im Falle von Gold und Platin zu hohen Kosten führt. Zudem oxidieren Gold und Platin bei hohen anodischen Potentialen, wie sie in Elektrolyseuren auftreten, so dass die Langzeitbeständigkeit dieser Materialien auf der Anode eines Elektrolyseurs angezweifelt werden kann. Genauere Untersuchungen hierzu sind jedoch nicht bekannt. Teilweise wird keine Schicht aufgetragen und eine Oxidation des Plattenmaterials, beispielsweise Titan, in Kauf genommen. Dies führt jedoch, wie bereits oben erwähnt, zu einer Herabsetzung der Leistungsfähigkeit dieser Elektrolyseure.

Daher sind Beschichtungen wünschenswert, die eine gute Korrosionsbeständigkeit aufweisen und preisgünstig sind, sowohl was die Material- als auch die Herstellungskosten angeht.

Daher stellt die vorliegende Erfindung die Verwendung einer porösen Transportschicht (PTL) zur Verfügung, aufweisend eine Schicht (S),
- welche eine Komponente (K), ausgewählt aus Ir, Ru, Rh, Os, deren Oxiden, oder Mischungen hiervon, enthält; und
- die Beladung an der Gesamtmenge von Ir, Ru, Rh und Os in metallischer und oxidischer Form bezogen auf Ir, Ru, Rh und Os 0,010 g/m² bis 2,0 g/ m² bezogen auf die Schicht (S) beträgt,
in einem Elektrolyseur, wobei der Elektrolyseur eine Elektrode enthält auf welcher die poröse Transportschicht (PTL) aufgebracht ist, und wobei eine Bipolarplatte auf die poröse Transportschicht (PTL) aufgebracht ist.

Die Beladung an Ir, Ru, Rh, Os, deren Oxiden, oder Mischungen hiervon, in der Schicht (S) der Bipolarplatte (BP) und der porösen Transportschicht (PTL) bezieht sich auf Ir, Ru, Rh, Os. Folglich wird der in den Oxiden vorhandene Sauerstoff nicht mitgerechnet.

Die Schicht führt zu einer hohen Korrosionsbeständigkeit wobei gleichzeitig die Leistungsfähigkeit des Elektrolyseurs nicht beeinträchtigt wird. Die Beschichtungen aus metallischem Iridium, Ruthenium, Rhodium und Osmium können zwar unter den Bedingungen im Elektrolyseur oxidiert werden. Die so erhaltenen Oxide führen nicht zu einer Herabsetzung der Leistungsfähigkeit. Es wird momentan davon ausgegangen, dass dies daran liegt, dass die Oxide selbst gut elektrisch leitfähig sind und daher keine oder keine wesentliche Zunahme des Widerstandes der Bipolarplatte, bzw. porösen Transportschicht hierdurch entsteht. Ein weiterer Vorteil besteht darin, dass Passivierungsschichten auf dem Material, auf das die Komponente (K) aufgetragen wird, normalerweise nicht entfernt werden müssen, da sich die in der vorliegenden Erfindung verwendeten Metalle, bzw. Metalloxide mit derartigen Passivierungsschichten gut verbinden. Dies ist im experimentellen Teil dadurch gezeigt, dass die unbeschichteten Substrate vor dem Korrosionstest einen höheren Kontaktwiderstand aufweisen als nach der Beschichtung.

Darüber hinaus bleibt dieser geringe Kontaktwiderstand des beschichteten Substrats bei allen Beispielen mit hinreichend großer Schichtdicke (entsprechend Tabelle 3 bei Beschichtung auf Titan mit einem Korrosionstest bei 2 V bei Ir-Schichtdicken größer oder gleich 50 nm, bei IrO₂ -Schichtdicken größer oder gleich 20 nm), auch nach dem Korrosionstest gering, insbesondere deutlich geringer als der Kontaktwiderstand vor der Beschichtung. Der Kontaktwiderstand, der durch die Passivierungsschicht, wie sie sich an Luft bildet, entsteht, kann also alleine durch die Beschichtung deutlich reduziert werden. Insbesondere bleibt dieser Effekt auch nach einem Korrosionstest bestehen.

In der Literatur werden häufig mechanische Schleifprozesse (z.B. Dongming Zhang, Liangtao Duan, Lu Guo, Wei-Hsing Tuan, Corrosion behavior of TiN-coated stainless steel as bipolar plate for proton exchange membrane fuel cell, international journal of hydrogen energy 35 (2010) 3721-3726)) , chemische oder elektrochemische Beizprozesse oder ein Ionen-Plasma-Ätzen (z.B. N.D. Nam, M.J. Kim, D.S. Jo, J.G. Kim, D.H. Yoon, Corrosion protection of Ti/TiN, Cr/TiN, Ti/CrN, and Cr/CrN multi-coatings in simulated proton exchange membrane fuel cell environment, Thin Solid Films 545 (2013) 380-384) beschrieben, die die Passivierungsschicht des Substrats vor der Beschichtung entfernen bzw. reduzieren sollen. Solche Prozesse können hier normalerweise entfallen.

Weiter sind die hier beschriebenen Schichtmaterialien Ir, Ru, Rh und Os edel, d.h. reagieren nur schwach in einem Plasma-Beschichtungsprozess mit durch das Plasma aus dem in einem unvollkommenen Vakuum immer vorhandenen Wasser gebildeten Sauerstoff. Darüber hinaus sind die sich dabei bildenden Oxide den Schichteigenschaften nicht abträglich. Das gilt umso mehr für die Abscheidung der Oxide. Daher sind die Anforderungen an die Qualität der Vakua bei der Abscheidung gering.

Der grundsätzliche Aufbau eines Elektrolyseurs aus dem Stand der Technik bekannt, beispielsweise aus Electrochemical Energy Storage for Renewable Sources and Grid Balancing, edited by:Patrick T. Moseley and Jürgen Garche, 2015, Elsevier B.V., ISBN: 978-0-444-62616-5, hier insbesondere:" Chapter 8 - Hydrogen Production from Renewable Energies - Electrolyzer Technologies ,Tom Smolinka, Emile Tabu Ojong, Jürgen Garche, Pages 103-128, und auch :" Chapter 11 - PEM Electrolyzers and PEM Regenerative Fuel Cells Industrial View", Cortney Mittelsteadt, Tim Norman, Meagan Rich, Jason Willey

Pages 159-181, oder auch M. Paidar, V. Fateev, K. Bouzek, "Membrane electrolysis-History, current status and perspective", Electrochimica Acta 209 (2016) 737-756.

Neben der PEM-Elektrolyse (z.B. basierend auf Membranen auf Basis von Perfluorosulfon-Säuren für Temperaturen unter 100°C und Polybenzimidazol dotiert mit Phosphorsäure für Temperaturen von typischerweise 120°C bis 200°C) gibt es beispielsweise die Chlor-Alkali-Elektrolyse oder Hochtemperaturelektrolyse mit Festelektrolyten ("solid oxide electrolysis") oder auch die reversiblen Brennstoffzellen bzw. "unitized regenerative fuel cells", die sowohl als Elektrolyseur als auch als Brennstoffzelle eingesetzt werden.

Üblicherweise enthält ein Elektrolyseur einen Ionenleiter, beispielsweise eine Membran (M) welche auf zwei entgegengesetzten Seiten jeweils eine Elektrode aufweist. Auf diesen Elektroden befindet sich normalerweise jeweils mindestens eine poröse Transportschicht (PTL) und auf dieser wiederum jeweils eine Bipolarplatte (BP). Jede dieser Komponenten kann wiederum aus mehreren Schichten bestehen. Ein Elektrolyseur kann auch mehrere derartige Anordnungen enthalten, die in Reihe geschaltet sind. Diese werden üblicherweise als "stack" bezeichnet.

Abbildung 1 zeigt ein Beispiel für den Aufbau eines Elektrolyseurs, wobei sich links die Kathodenseite und rechts die Anodenseite befindet. Die Bezugszeichen stellen das Folgende dar:
- 1: eine Bipolarplatte (BP)
- 2: eine poröse Transportschicht (PTL) bezeichnet

Eine weitere Bipolarplatte und poröse Transportschicht befindet sich auf der anderen Seite des Elektrolyseurs (nicht mit Bezugszeichen markiert).
- 3: Elektrode
- 4: Polymermembran

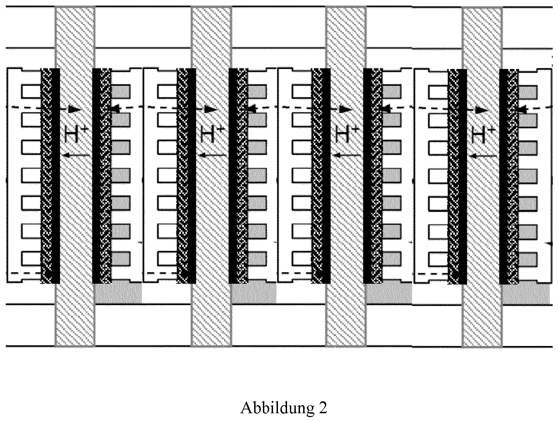

Abbildung 2 zeigt einen entsprechenden stack der, in Abbildung 1, gezeigten Vorrichtungen.

In einem solchen Elektrolyseur liegt normalerweise ein Potential von mindestens 1,2 V an, vorzugsweise mindestens 1,5 V gegen Normalwasserstoffelektrode, an.

Insbesondere sind die Bipolarplatte (BP) und/oder die poröse Transportschicht (PTL) für die Anodenseite eines Elektrolyseurs geeignet. Auf der Anodenseite eines Elektrolyseurs werden elektrochemisch stabilere Komponenten benötigt.

Geeignete Elektrodenmaterialien, Polymermembrane, poröse Transportschichten etc. sind aus dem Stand der Technik bekannt und beispielsweise beschrieben in "A comprehensive review on PEM water electrolysis, Marcelo Carmo, David L. Fritz, Jürgen Mergel, Detlef Stolten, International Journal of Hydrogen Energy 38 (2013) 4901-4934, "Electrocatalysts for the generation of hydrogen, oxygen and synthesis gas", Foteini M. Sapountzi, Jose M. Gracia, C.J. (Kees-Jan)Weststrate, Hans O.A. Fredriksson, J.W. (Hans) Niemantsverdriet, Progress in Energy and Combustion Science 58 (2017) 1-35, "A review on unitized regenerative fuel cell technologies, part-A: Unitized regenerative proton exchange membrane fuel cells", Yifei Wang, Dennis Y.C. Leung, Jin Xuan, Huizhi Wang, Renewable and Sustainable Energy Reviews 65 (2016) 961-977, US 2004/247978, CA 2 968 036 und DE 691 15 213 T2. Vorzugsweise ist die Schicht (S) die äußerste Schicht der Bipolarplatte (BP) bzw. der porösen Transportschicht (PTL). Äußerste Schicht bedeutet in der vorliegenden Offenbarung, dass die auf die Schicht (S) keine weitere Schicht aufgetragen wird. Die Schicht (S) steht somit normalerweise zumindest teilweise mit der benachbarten Komponente des Elektrolyseurs in Kontakt.

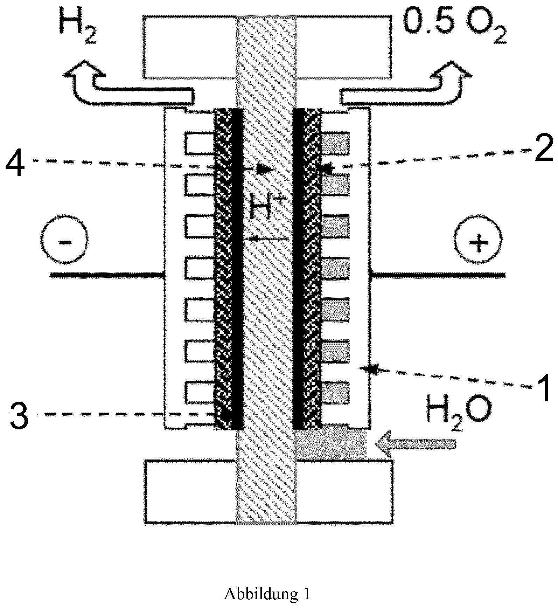

Da eine Bipolarplatte (BP) bzw, eine poröse Transportschicht (PTL) normalerweise nicht vollständig geschlossen bzw. eben sind, siehe beispielsweise Abbildung 1, kann es vorkommen, dass nicht die gesamte Schicht (S) in Kontakt mit der benachbarten Komponente des Elektrolyseurs steht.

Die poröse Transportschicht (PTL) enthält üblicherweise
- einen Kern (PTL-KE)
- optional eine Zwischenschicht (PTL-ZS)
- die Schicht (S) welche auf dem Kern (PTL-KE), bzw. der Zwischenschicht (PTL-ZS), falls vorhanden, aufgebracht ist.

Der Kern (PTL-KE) enthält vorzugsweise, stärker bevorzugt besteht aus, Titan, Edelstahl, Nickel-Legierungen und Aluminium, besonders bevorzugt ist Titan.

Bei den Substratmaterialien Edelstähle, Nickel-Legierungen und Aluminium wird üblicherweise eine Zusatzschicht aufgetragen, z.B. aus Titan, Niob, Tantal, Zirkon, Chrom, oder deren Nitriden oder Karbiden. Diese Zusatzschichten schützen das Edelstahl-, Nickel-Legierungen und Aluminium-Substrat vor Auflösung, müssen aber ihrerseits durch die weitere Schicht (S) vor der Bildung eines hohen Kontaktwiderstands durch Passivierung geschützt werden.

Insbesondere bevorzugt ist es wenn der Kern (PTL-KE) Titan enthält, noch stärker bevorzugt besteht der Kern (PTL-KE) aus Titan.

Die Zwischenschicht (PTL-ZS), falls vorhanden, kann die Schichthaftung der Schicht (S) verbessern, obwohl die Haftung der Komponente (K) auf dem Kern (PTL-KE) bereits sehr gut ist.

Falls vorhanden enthält die Zwischenschicht (PTL-ZS) üblicherweise, vorzugsweise besteht aus, Titan, Niob, Tantal, Zirkon, Chrom, deren Nitride oder Karbide, oder leitfähig dotierte Oxide, wie z.B. Antimon dotiertes Zinnoxid (Sb:SnO₂) oder Niob dotiertes Titanoxid (Nb:TiO₂) oder Mischungen hiervon.

Grundsätzlich kann es vorteilhaft sein, den Übergang aus Zwischenschicht (PTL-ZS) und Schicht (S) kontinuierlich in einem Gradienten zu gestalten, bei dem die einzelnen Komponenten der Zwischenschicht (PTL-ZS) mit zunehmender Schichthöhe (Abstand vom Kern (PTL-KE)) kontinuierlich abnehmen und die Komponenten der Schicht (S) kontinuierlich zunehmen.

Die Schicht (S) befindet sich dann üblicherweise auf einer Seite dieser porösen Transportschicht (PTL) die der Bipolarplatte (BP) oder der Elektrode zugewendet ist. Die Schicht (S) kann sich auch auf beiden Seiten dieser porösen Transportschicht (PTL) befinden, also sowohl auf der Seite, die der Bipolarplatte (BP) und der Seite, welche der Elektrode zugewendet ist.

Wie oben erwähnt befinden sich auf den Elektroden des Elektrolyseurs normalerweise jeweils mindestens eine poröse Transportschicht (PTL). Ein Elektrolyseur kann mehrere poröse Transportschichten auf einer Elektrode enthalten. Hier kann es vorteilhaft sein, die Schicht (S) auf der Oberfläche einer porösen Transportschicht (PTL) abzuscheiden, die einer anderen porösen Transportschicht (PTL) zugewandt ist, oder auch auf beiden Oberflächen der in Kontakt stehenden porösen Transportschichten (PTL). Insbesondere kann es ausreichend sein, nur die äußere Oberfläche einer porösen Transportschicht zu beschichten, die in Kontakt mit einer Elektrode, einer Bipolarplatte oder einer anderen porösen Transportschicht steht, ohne die innere Oberfläche der porösen Transportschicht zu beschichten.

Die Dicke der Zwischenschicht (PTL-ZS), falls vorhanden, beträgt vorzugsweise 0,10 bis 10000 nm, stärker bevorzugt sind 1,0 bis 500 nm, noch stärker bevorzugt 1,0 bis 50 nm.

Die Bipolarplatte (BP) enthält üblicherweise
- einen Kern (BP-KE)
- optional eine Zwischenschicht (BP-ZS)
- die Schicht (S) welche auf dem Kern (BP-KE), bzw. der Zwischenschicht (BP-ZS), falls vorhanden, aufgebracht ist.

Der Kern (BP-KE) enthält vorzugsweise, stärker bevorzugt besteht aus, Titan, Edelstahl, Nickel-Legierungen und Aluminium, besonders bevorzugt ist Titan. Bei den Substratmaterialien Edelstähle, Nickel-Legierungen und Aluminium wird üblicherweise eine Zusatzschicht aufgetragen, z.B. aus Titan, Niob, Tantal, Zirkon, Chrom, oder deren Nitriden oder Karbiden. Diese Zusatzschichten schützen das Edelstahl-, Nickel-Legierungen und Aluminium-Substrat vor Auflösung, müssen aber ihrerseits durch die weitere Schicht (S) vor der Bildung eines hohen Kontaktwiderstands durch Passivierung geschützt werden.

Insbesondere bevorzugt ist es wenn der Kern (BP-KE) Titan enthält, noch stärker bevorzugt besteht der Kern (BP-KE) aus Titan.

Die Zwischenschicht (BP-ZS), falls vorhanden, kann die Schichthaftung der Schicht (S) verbessern, obwohl die Haftung der Komponente (K) auf dem Kern (BP-KE) bereits sehr gut ist.

Falls vorhanden enthält die Zwischenschicht (BP-ZS) üblicherweise, vorzugsweise besteht aus, Titan, Niob, Tantal, Zirkon, Chrom, deren Nitride oder Karbide, oder leitfähig dotierte Oxide, wie z.B. Antimon dotiertes Zinnoxid (Sb:SnO₂) oder Niob dotiertes Titanoxid (Nb:TiO₂) oder Mischungen hiervon.

Grundsätzlich kann es vorteilhaft sein, den Übergang aus Zwischenschicht (BP-ZS) und Schicht (S) kontinuierlich in einem Gradienten zu gestalten, bei dem die einzelnen Komponenten der Zwischenschicht (BP-ZS) mit zunehmender Schichthöhe (Abstand vom Kern (BP-KE)) kontinuierlich abnehmen und die Komponenten der Schicht (S) kontinuierlich zunehmen.

Die Dicke der Zwischenschicht (BP-ZS), falls vorhanden, beträgt vorzugsweise 0,10 bis 10000 nm, stärker bevorzugt sind 1,0 bis 500 nm, noch stärker bevorzugt 1,0 bis 50 nm.

Im Folgenden werden bevorzugte Ausführungsvarianten der Bipolarplatte (BP) und der porösen Transportschicht (PTL) beschrieben.

Es wurde überaschenderweise gefunden, dass die Schicht (S) nicht aus der Komponente (K) bestehen muss um eine gute Langlebigkeit zu erreichen.

In der Schicht (S) auf der Bipolarplatte (BP) oder der porösen Transportschicht (PTL) beträgt die Gesamtmenge an Ir, Ru, Rh und Os in metallischer und oxidischer Form vorzugsweise mindestens 20 Atom-% bezogen auf die Gesamtmenge an Metallatomen in der Schicht (S), stärker bevorzugt sind mindestens 40 Atom-%, noch stärker bevorzugt mindestens 70 Atom %.

In der Bipolarplatte (BP) oder der porösen Transportschicht (PTL) enthält die Schicht (S) vorzugsweise, stärker bevorzugt besteht aus
- einer Gesamtmenge von 20 bis 100 Atom-%, vorzugsweise 40 bis 100 Atom-%, stärker bevorzugt 70 bis 100 Atom-% an Ir, Ru, Rh und Os in metallischer und oxidischer Form; und
- einer Gesamtmenge von 0 bis 80 Atom-%, vorzugsweise 0 bis 60 Atom-%, stärker bevorzugt 0 bis 30 Atom-% an Ti, TiO₂, Ta, Ta₃O₅, Nb, Nb₂O₅, Zr, ZrO₂, Ni, NiO₂, Co, CoO₂, Si, SiO₂, Al, Al₂O₃, In, In₂O₃, Bi, Bi₃O₅, Sn, SnO₂ oder Mischungen hiervon
jeweils bezogen auf die Gesamtmenge an Metallatomen in der Schicht (S).

In einer bevorzugten Variante der Schicht (S) auf der Bipolarplatte (BP) oder der porösen Transportschicht (PTL) beträgt die Gesamtmenge an Ir, Ru, Rh und Os in metallischer und oxidischer Form mindestens 90 Atom-% bezogen auf die Gesamtmenge an Metallatomen in der Schicht (S), insbesondere bevorzugt bestehen die Metallatome der Schicht (S) aus Ir, Ru, Rh und Os in metallischer und oxidischer Form.

Als Metallatome der Schicht (S) werden Na, Mg, Al und Si,die Summe aller Elemente der vierten bis sechsten Periode des Periodensystems der Elemente mit Ausnahme der Halogene und Edelgase angesehen.

In der Bipolarplatte (BP) beträgt die Beladung an der Gesamtmenge von Ir, Ru, Rh und Os in metallischer und oxidischer Form bezogen auf Ir, Ru, Rh und Os vorzugsweise mindestens 0,0025 g/m², stärker bevorzugt mindestens 0,0050 g/m² bezogen auf die Schicht (S).

In der Bipolarplatte (BP) beträgt die Beladung an der Gesamtmenge von Ir, Ru, Rh und Os in metallischer und oxidischer Form bezogen auf Ir, Ru, Rh und Os vorzugsweise 0,0025 g/m² bis 10 g/m², stärker bevorzugt sind 0,0050 g/m² bis 5,0 g/m², noch stärker bevorzugt 0,010 bis 2,0 g/m² und am stärksten bevorzugt 0,020 bis 1,0 g/m² bezogen auf die Schicht (S). Üblicherweise enthält die Bipolarplatte (BP) und/oder poröse Transportschicht (PTL) Ir, Ru, Rh und Os in metallischer und oxidischer Form ausschließlich in der Schicht (S).

Die Stromdichte gemessen an der Bipolarplatte (BP) und an der porösen Transportschicht (PTL) ist ein Indiz dafür, dass die Schicht (S) kompakt ist, d.h. gering bzw. nicht porös.

Die Stromdichte, gemessen an der Bipolarplatte (BP) und/oder an der porösen Transportschicht (PTL) mit der Schicht (S) nach 10 Stunden bei 2 V vs. Normalwasserstoffelektrode (NHE) bei 25°C in einem wässrigen Elektrolyten mit 0.5 mol/lNa₂SO₄, 1 mmol/l H₂SO₄ auf pH=3 eingestellt, beträgt normalerweise 0,50 A/cm² oder weniger, bevorzugt 0,25 A/cm² oder weniger, stärker bevorzugt sind 100 mA/cm² oder weniger und am stärksten bevorzugt 50 mA/cm² oder weniger.

In einer bevorzugten Variante der Bipolarplatte (BP) oder porösen Transportschicht (PTL) ist die Komponente (K) ausgewählt aus Ir, dessen Oxiden oder Mischungen hiervon.

In der Bipolarplatte (BP) oder der porösen Transportschicht (PTL) beträgt die Gesamtmenge an Ir, dessen Oxiden oder Mischungen hiervon vorzugsweise mindestens 20 Atom-% bezogen auf die Gesamtmenge an Metallatomen in der Schicht (S), stärker bevorzugt sind mindestens 40 Atom-%, noch stärker bevorzugt mindestens 70 Atom %.

In der Bipolarplatte (BP) oder der porösen Transportschicht (PTL) enthält die Schicht (S) vorzugsweise, stärker bevorzugt besteht aus
- einer Gesamtmenge von 20 bis 100 Atom-%, vorzugsweise 40 bis 100 Atom-%, stärker bevorzugt 70 bis 100 Atom-% an Ir, dessen Oxiden oder Mischungen hiervon; und
- einer Gesamtmenge von 0 bis 80 Atom-%, vorzugsweise 0 bis 60 Atom-%, stärker bevorzugt 0 bis 30 Atom-% an Ti, TiO₂, Ta, Ta₂O₅, Nb, Nb₂O₅, Zr, ZrO₂, Ni, NiO₂, Co, CoO₂, Si, SiO₂, Al, Al₂O₃, In, In₂O₃, Bi, Bi₃O₅, Sn, SnO₂ oder Mischungen hiervon
jeweils bezogen auf die Gesamtmenge an Metallatomen in der Schicht (S).

In einer bevorzugten Variante der Bipolarplatte (BP) oder der porösen Transportschicht (PTL) beträgt die Gesamtmenge an Ir, dessen Oxiden oder Mischungen hiervon mindestens 90 Atom-% bezogen auf die Gesamtmenge an Metallatomen in der Schicht (S), insbesondere bevorzugt bestehen die Metallatome der Schicht (S) aus Ir in metallischer und/oder oxidischer Form.

Als Metallatome der Schicht (S) werden Na, Mg, Al und Si, die Summe aller Elemente der vierten bis sechsten Periode des Periodensystems der Elemente mit Ausnahme der Halogene und Edelgase angesehen.

In der Bipolarplatte (BP) beträgt die Beladung an der Gesamtmenge von Ir in metallischer und oxidischer Form bezogen auf Ir vorzugsweise mindestens 0,0025 g/m², stärker bevorzugt mindestens 0,0050 g/m² bezogen auf die Schicht (S).

In der Bipolarplatte (BP) beträgt die Beladung an der Gesamtmenge von Ir in metallischer und oxidischer Form vorzugsweise 0,0025 g/m² bis 10 g/m², stärker bevorzugt sind 0,0050 g/m² bis 5,0 g/m², noch stärker bevorzugt 0,010 bis 2,0 g/m² und am stärksten bevorzugt 0,020 bis 1,0 g/m² bezogen auf die Schicht (S).

Die Herstellung der Bipolarplatten (BP) und porösen Transportschichten (PTL) ist aus dem Stand der Technik bekannt und, unter anderem in "A comprehensive review on PEM water electrolysis, Marcelo Carmo, David L. Fritz, Jürgen Mergel, Detlef Stolten, International Journal of Hydrogen Energy 38 (2013) 4901-4934,

"Review of the membrane and bipolar plates materials for conventional and unitized regenerative fuel cells", Salwan S. Dihrab, K. Sopian, M.A. Alghoul, M.Y. Sulaiman, Renewable and Sustainable Energy Reviews 13 (2009) 1663-1668 beschrieben.

Insbesondere bevorzugt ist es, dass die Schicht (S) und, falls vorhanden, die Zwischenschichten (BP-ZS) und (PTL-ZS) mittels Kathodenzerstäubung ("Sputtering") aufgetragen wird. Weitere mögliche Abscheidemethoden sind u.a. thermisches Verdampfen, Lichtbogen-Verdampfen, galvanische Abscheidung oder die Abscheidung aus einer Chlorid-Lösung. Dabei ist sowohl eine Rolle-zu-Rolle Beschichtung als auch eine Beschichtung von Platten (sheet-to-sheet) möglich. Kathodenzerstäubung ist bevorzugt. Üblicherweise wird die Kathodenzerstäubung bei einem Druck von 10⁻⁴ bis 10⁻¹ mbar und einer Temperatur von 0°C bis 600°C durchgeführt.

Mittels der Beschichtungverfahren, beispielsweise Kathodenzerstäubung, wird häufig kein reines stöchiometrisches Oxid, beispielsweise IrO₂ abgeschieden, sondern als Mischung mit Suboxiden. Daher sind keine Summenformeln für die Oxide angebbar.

Wie oben ausgeführt liegt in einem Elektrolyseur normalerweise ein Potential von mindestens 1,2 V an, vorzugsweise mindestens 1,5 V gegen Normalwasserstoffelektrode, an.

Die Erfindung ist ferner gerichtet auf eine Verwendung, wobei die Schicht (S) als Korrosionsschutzschicht verwendet wird.

Die Gesamtmenge an Ir, Ru, Rh und Os in metallischer und oxidischer Form in der Schicht (S) beträgt vorzugsweise mindestens 20 Atom-% bezogen auf die Gesamtmenge an Metallatomen in der Schicht (S), stärker bevorzugt sind mindestens 40 Atom-%, noch stärker bevorzugt mindestens 70 Atom %.

Die Schicht (S) enthält vorzugsweise, stärker bevorzugt besteht aus
- einer Gesamtmenge von 20 bis 100 Atom-%, vorzugsweise 40 bis 100 Atom-%, stärker bevorzugt 70 bis 100 Atom-% an Ir, Ru, Rh und Os in metallischer und oxidischer Form; und
- einer Gesamtmenge von 0 bis 80 Atom-%, vorzugsweise 0 bis 60 Atom-%, stärker bevorzugt 0 bis 30 Atom-% an Ti, TiO₂, Ta, Ta₃O₅, Nb, Nb₂O₅, Zr, ZrO₂, Ni, NiO₂, Co, CoO₂, Si, SiO₂, Al, Al₂O₃, In, In₂O₃, Bi, Bi₃O₅, Sn, SnO₂ oder Mischungen hiervon
jeweils bezogen auf die Gesamtmenge an Metallatomen in der Schicht (S).

In einer bevorzugten Variante beträgt die Gesamtmenge an Ir, Ru, Rh und Os in metallischer und oxidischer Form in der Schicht (S) mindestens 90 Atom-% bezogen auf die Gesamtmenge an Metallatomen in der Schicht (S), insbesondere bevorzugt bestehen die Metallatome der Schicht (S) aus Ir, Ru, Rh und Os in metallischer und/oder oxidischer Form.

Als Metallatome der Schicht (S) werden in der vorliegenden Offenbarung Na, Mg, Al und Si, die Summe aller Elemente der vierten bis sechsten Periode des Periodensystems der Elemente mit Ausnahme der Halogene und Edelgase angesehen.

Stärker bevorzugt beträgt in der Schicht (S) die Beladung an der Gesamtmenge von Ir, Ru, Rh und Os in metallischer und oxidischer Form bezogen auf Ir, Ru, Rh und Os 0,020 bis 1,0 g/m² bezogen auf die Schicht (S). In einer bevorzugten Variante der Schicht (S) gemäß der vorliegenden Erfindung ist die Komponente (K) ausgewählt aus Ir, dessen Oxiden oder Mischungen hiervon.

Die Gesamtmenge an Ir, dessen Oxiden oder Mischungen hiervon in der Schicht (S) beträgt vorzugsweise mindestens 20 Atom-% bezogen auf die Gesamtmenge an Metallatomen in der Schicht (S), stärker bevorzugt sind mindestens 40 Atom-%, noch stärker bevorzugt mindestens 70 Atom %.

Die Schicht (S) enthält, vorzugsweise besteht aus
- einer Gesamtmenge von 20 bis 100 Atom-%, vorzugsweise 40 bis 100 Atom-%, stärker bevorzugt 70 bis 100 Atom-% an Ir, dessen Oxiden oder Mischungen hiervon; und
- einer Gesamtmenge von 0 bis 80 Atom-%, vorzugsweise 0 bis 60 Atom-%, stärker bevorzugt 0 bis 30 Atom-% an Ti, TiO₂, Ta, Ta₂O₅Nb, Nb₂O₅, Zr, ZrO₂, Ni, NiO₂, Co, CoO₂, Si, SiO₂, Al, Al₂O₃, In, In₂O₃, Bi, Bi₂O₅, Sn, SnO₂ oder Mischungen hiervon
jeweils bezogen auf die Gesamtmenge an Metallatomen in der Schicht (S).

In einer bevorzugten Variante der Schicht (S) beträgt die Gesamtmenge an Ir, dessen Oxiden oder Mischungen hiervon mindestens 90 Atom-% bezogen auf die Gesamtmenge an Metallatomen in der Schicht (S), insbesondere bevorzugt bestehen die Metallatome der Schicht (S) aus Ir in metallischer und oxidischer Form.

Als Metallatome der Schicht (S) werden in der vorliegenden Erfindung Na, Mg, Al und Si,die Summe aller Elemente der vierten bis sechsten Periode des Periodensystems der Elemente mit Ausnahme der Halogene und Edelgase angesehen.

Stärker bevorzugt beträgt in der Schicht (S) die Beladung an der Gesamtmenge von Ir in metallischer und oxidischer Form bezogen auf Ir 0,020 bis 1,0 g/m² bezogen auf die Schicht (S).

Vorzugsweise ist die Schicht (S) die äußerste Schicht auf dem jeweiligen Teil der elektrochemischen Anlage.

Vorzugsweise wird die Schicht (S) als Korrosionsschutzschicht auf Bipolarplatten (nicht gemäß der Erfindung) oder porösen Transportschichten verwendet.

In allen Ausführungsformen der vorliegenden Offenbarung inklusive aller bevorzugter Varianten beträgt die Gesamtmenge an Ti, TiO₂, Ta, Ta₂O₅, Nb, Nb₂O₅, Zr, ZrO₂, Ni, NiO₂, Co, CoO₂, Si, SiO₂, Al, Al₂O₃, In, In₂O₃, Bi, Bi₂O₅, Sn, SnO₂ oder Mischungen hiervon bezogen auf die Gesamtmenge an Metallatomen in der Schicht (S) von 0 bis 80 Atom-%, vorzugsweise 0 bis 60 Atom-%, stärker bevorzugt 0 bis 30 Atom-%.

### Experimenteller Teil

### Bestimmung der Beladung an Ir, Ru, Rh, Os, deren Oxiden, oder Mischungen hiervon

Die Beladung der Schicht(S) wurde mittels Röntgenfluoreszenzanalyse bestimmt. Bestimmung des Anteils an Ir, Ru, Rh und Os bezogen auf die Gesamtmenge an Metallatomen in der Schicht (S)

Die Anteile von Iridium Ir, Ru, Rh und Os bezogen auf die Gesamtmenge an Metallatomen in der Schicht (S) wurde mittels XPS-Verfahren (X-Ray Photoelectron Spectroscopy). Diese wurde mit einem fortschreitenden Abtrag der Oberfläche durch eine Ionenquelle kombiniert, so dass ein Tiefenprofil der Zusammensetzung gewonnen wurde. Die Bereiche die in der vorliegenden Erfindung angegeben sind gelten als erfüllt, wenn sie von zumindest einem dieser Tiefenbereiche erfüllt sind.

Die Schichtdicken wurden mittels eines Profilometers bestimmt.

Iridium- bzw. Iridiumoxidschichten wurden auf folgende Metallbleche mittels sputtering wie folgt aufgetragen:
- Gebeizter Edelstahl (316L, 1.4404) : Lieferant: Borit NV, Belgien.
- Titan (grade 1) (Lieferant: Borit NV, Belgien

Die gebeizte Edelstahlbleche (316L) wurden 10 min mit 10%er HCl bei 25°C gebeizt und anschließend wurden Iridium- bzw. Iridiumoxidschichten mit den in Tabelle 1 genannten Beladungen mittels Kathodenzerstäubung ("sputtern") abgeschieden. Insbesondere wurden ein planares Iridium-Target verwendet. Die Kathode wies ein Magnetfeld auf ("Magnetron-Sputtern") und wurde im DC-Modus betrieben. Die Oxide wurden durch Zugabe von Sauerstoff (reaktives Sputtern) hergestellt. Die Substrate wurden über eine Schleuse in die Beschichtungskammer eingeschleust, und vor der Beschichtungsquelle mit konstanter Geschwindigkeit bewegt, wie in einem Inline-Prozess. Der Druck lag etwa bei 3*10⁻³mbar, der Sputter-Strom war 1-3 A. Anschließend wurde ein zweistufiger Korrosionstest wie folgt durchgeführt.

Ein Polarisationsdiagramm ("linear sweep"), mit einem kontinuierlichen Anstieg der Spannung von 0 V vs. Standardwasserstoffelektrode (SHE) auf 1 V vs. SHE mit einer Vorschubrate von 1 mV/sec in einem wässrigen Elektrolyten mit 0.5 mol/l Na₂SO₄, 1 mmol/l H₂SO₄ (auf pH=3 eingestellt) wurde unter Verwendung eines Potentiostaten (Ivium n-stat) aufgenommen. Anschließend wurde mit demselben Gerät eine Chronoamperometrie, mit dem Elektrolyten wie zuvor und einer konstanten Spannung von 1 V vs. SHE für 24 Stunden aufgenommen.

Der Kontaktwiderstand (Interfacial Contact Resistance, ICR) wurde durch Verpressen des Blechs gegen ein Karbon-Papier (Toray TGP H120), wie es als "Gas Diffusion Layer" in Brennstoffzellen zum Einsatz kommt, in einer 4-Punkt Messung bei einer Stromdichte von 1 A/cm² und einem Anpressdruck von 150 N/cm² gemessen. Das zu vermessende Blech und das Karbon-Papier wurden zwischen zwei vergoldetet Edelstahlzylinder (Fläche: 1 cm²) gelegt, und durch Auflegen von Gewichten verpresst. Zwischen dem Blech und dem Zylinder in Kontakt mit dem Karbon-Papier wurde eine Spannung gemessen, und die Anteile des Spannungsabfalls, die durch den Eigenwiderstand des Karbon-Papiers ("bulk"-Widerstand) und den Kontaktwiderstand zwischen vergoldetem Zylinder und Karbon-Papier hervorgerufen werden, wurden abgezogen.

**Tabelle 1 (Substratmaterial Edelstahl, maximale Spannung im Korrosionstest 1 V)**

| Schichtmaterial Schicht (S) | Schichtdicke Schicht (S) | Beladung Schicht (S) | ICR vor Korrosion | ICR nach Korrosion |
|---|---|---|---|---|
| | [nm] | [g/m²] | [mOhm·cm²] | [mOhm·cm²] |
| unbeschichtet | 0 | 0 | 5,6 | 81 |
| Ir | 0,5 | 0,011 | 1,7 | 4,8 |
| Ir | 5 | 0,11 | 2,2 | 2,3 |
| Ir | 10 | 0,23 | 1,8 | 2,7 |
| Ir | 20 | 0,45 | 2,3 | 2,4 |
| Ir | 50 | 1,1 | 2,0 | 2,4 |
| Ir | 100 | 2,2 | 2,0 | 2,4 |
| IrO₂ | 0,4 | 0,004 | 5 | 9,4 |
| IrO₂ | 1,6 | 0,016 | 3,5 | 3,8 |
| IrO₂ | 2,5 | 0,025 | 2,6 | 2,9 |
| IrO₂ | 5 | 0,05 | 2,1 | 2,7 |
| IrO₂ | 20 | 0,20 | 2,4 | 3,0 |
| IrO₂ | 50 | 0,50 | 2,4 | 3,5 |
| IrO₂ | 100 | 1,0 | 2,1 | 2,8 |

Die Titanbleche wurden zunächst mit Schleifpapier aufweisend eine Körnung 600, anschließend mit Schleifpapier aufweisend eine Körnung 2000 geschliffen. Danach wurden die Titanbleche noch alkalisch gereinigt (durch Wischen mit einen Tuch getränkt mit 3% Deconex OP153 Reinigungslösung der Fa. Borer, Schweiz, Abspülen mit Wasser, Wischen mit einem mit Wasser getränktem Tuch, Abspülen mit Wasser) und anschließend wurden Iridium- bzw. Iridiumoxidschichten mit den in Tabelle 2 genannten Beladungen mittels Kathodenzerstäubung ("sputtern") abgeschieden. Die Bedingungen waren dieselben wie bei der Abscheidung auf Edelstahl wie oben beschrieben.

Ein Polarisationsdiagramm ("linear sweep"), mit einem kontinuierlichen Anstieg der Spannung von 0 V vs. Standardwasserstoffelektrode (SHE) auf 2 V vs. SHE mit einer Vorschubrate von 1 mV/sec in einem wässrigen Elektrolyten mit 0.5 mol/l Na₂SO₄, 1 mmol/l H₂SO₄ (auf pH=3 eingestellt) wurde unter Verwendung eines Potentiostaten (Ivium n-stat) aufgenommen. Anschließend wurde mit demselben Gerät eine Chronoamperometrie, mit dem Elektrolyten wie zuvor und einer konstanten Spannung von 2 V vs. SHE für 24 Stunden aufgenommen.

Der Kontaktwiderstand (Interfacial Contact Resistance, ICR) wurde durch Verpressen des Blechs gegen ein Karbon-Papier (Toray TGP H120), wie es als "Gas Diffusion Layer" in Brennstoffzellen zum Einsatz kommt, in einer 4-Punkt Messung bei einer Stromdichte von 1 A/cm2 und einem Anpressdruck von 150 N/cm₂ gemessen.

**Tabelle 2 (Substratmaterial Titan, maximale Spannung im Korrosionstest 2 V)**

| Schichtmaterial Schicht (S) | Schichtdicke Schicht (S) | Beladung Schicht (S) | ICR vor Korrosion | ICR nach Korrosion |
|---|---|---|---|---|
| | [nm] | [g/m²] | [mOhm·cm²] | [mOhm·cm²] |
| unbeschichtet | 0 | 0 | 77 | 934 |
| Ir | 5 | 0,11 | 2,7 | 655 |
| Ir | 10 | 0,23 | 2,4 | 680 |
| Ir | 20 | 0,45 | 2,2 | 623 |
| Ir | 50 | 1,1 | 2,1 | 2,0 |
| Ir | 100 | 2,2 | 2,1 | 2,8 |
| IrO₂ | 5 | 0,05 | 12,3 | 609 |
| IrO₂ | 10 | 0,10 | 5,8 | 686 |
| IrO₂ | 20 | 0,20 | 3,6 | 4,3 |
| IrO₂ | 50 | 0,50 | 3,6 | 3,1 |
| IrO₂ | 100 | 1,0 | 3,6 | 2,9 |

Die Stromdichten, die bei oben genannter Chronoamperometrie gemessen wurden, lagen bei ca. 10 mA/cm² (10 nm Ir) bis ca. 20 mA/cm² (100 nm Ir), bzw. ca. 20 mA/cm² (5 nm IrO₂ als auch 100 nm IrO₂).

Die oben genannte Versuchsreihe für Titanbelche wurde wiederholt, jedoch wurden die Titanbleche nur alkalisch gereinigt wie oben angegeben. Die Ergebnisse sind in Tabelle 3 gezeigt.

**Tabelle 3 (Substratmaterial Titan, maximale Spannung im Korrosionstest 2 V)**

| Schichtmaterial Schicht (S) | Schichtdicke Schicht (S) | Beladung Schicht (S) | ICR vor Korrosion | ICR nach Korrosion |
|---|---|---|---|---|
| | [nm] | [g/m²] | [mOhm·cm²] | [mOhm·cm²] |
| unbeschichtet | 0 | 0 | 182 | 441 |
| Ir | 5 | 0,11 | 2,0 | 185 |
| Ir | 10 | 0,23 | 1,7 | 175 |
| Ir | 20 | 0,45 | 2,5 | 394 |
| Ir | 50 | 1,1 | 1,1 | 1,8 |
| IrO₂ | 5 | 0,05 | 23 | 173 |
| IrO₂ | 10 | 0,10 | 5,6 | 84 |
| IrO₂ | 20 | 0,20 | 7,6 | 24 |
| IrO₂ | 50 | 0,50 | 3,2 | 4,2 |

Die Stromdichten, die bei oben genannter Chronoamperometrie gemessen wurden, lagen bei ca. 15 mA/cm² für alle Substrate.

## Patentansprüche

1. Verwendung einer porösen Transportschicht (PTL), aufweisend eine Schicht (S),
- welche eine Komponente (K), ausgewählt aus Ir, Ru, Rh, Os, deren Oxiden, oder Mischungen hiervon, enthält; und
- die Beladung an der Gesamtmenge von Ir, Ru, Rh und Os in metallischer und oxidischer Form bezogen auf Ir, Ru, Rh und Os 0,010 g/m² bis 2,0 g/m² bezogen auf die Schicht (S) beträgt,
in einem Elektrolyseur,
wobei der Elektrolyseur eine Elektrode enthält auf welcher die poröse Transportschicht (PTL) aufgebracht ist, und wobei eine Bipolarplatte auf die poröse Transportschicht (PTL) aufgebracht ist.

2. Verwendung gemäß Anspruch 1, wobei die Bipolarplatte eine Bipolarplatte (BP) ist, aufweisend eine Schicht (S),
- welche eine Komponente (K), ausgewählt aus Ir, Ru, Rh, Os, deren Oxiden, oder Mischungen hiervon, enthält; und
- die Beladung an der Gesamtmenge von Ir, Ru, Rh und Os in metallischer und oxidischer Form bezogen auf Ir, Ru, Rh und Os weniger als 20,0 g/m² beträgt, bezogen auf die Schicht (S) der Bipolarplatte (BP).

3. Verwendung gemäß einem der vorangegangenen Ansprüche, wobei die Schicht (S) die äußerste Schicht der porösen Transportschicht (PTL) ist.

4. Verwendung gemäß einem der vorangegangenen Ansprüche, wobei die Gesamtmenge an Ir, Ru, Rh und Os in der Schicht (S) in metallischer und oxidischer Form mindestens 20 Atom-% bezogen auf die Gesamtmenge an Metallatomen in der Schicht (S) beträgt.

5. Verwendung gemäß einem der vorangegangenen Ansprüche, wobei die Schicht (S)
- eine Gesamtmenge von 20 bis 100 Atom-%, vorzugsweise 40 bis 100 Atom-%, stärker bevorzugt 70 bis 100 Atom-% an Ir, Ru, Rh und Os in metallischer und oxidischer Form; und
- eine Gesamtmenge von 0 bis 80 Atom-%, vorzugsweise 0 bis 60 Atom-%, stärker bevorzugt 0 bis 30 Atom-% an Ti, TiO₂, Ta, Ta₂O₅, Nb, Nb₂O₅, Zr, ZrO₂, Ni, NiO₂, Co, CoO₂, Si, SiO₂, Al, Al₂O₃, In, In₂O₃, Bi, Bi₂O₅, Sn, SnO₂ oder Mischungen hiervon
jeweils bezogen auf die Gesamtmenge an Metallatomen in der Schicht (S) enthält.

6. Verwendung gemäß einem der vorangegangenen Ansprüche, wobei die Komponente (K) ausgewählt ist aus Ir, dessen Oxiden oder Mischungen hiervon.

7. Verwendung gemäß einem der vorangegangenen Ansprüche, wobei die Schicht (S) als Korrosionsschutzschicht verwendet wird.

## Claims

1. Use of a porous transport layer (PTL) having a layer (S)
- which comprises a component (K) selected from Ir, Ru, Rh, Os, their oxides, or mixtures thereof; and
- the loading in terms of the total amount of Ir, Ru, Rh and Os in metallic and oxidic form, based on Ir, Ru, Rh and Os, is 0.010 g/m² to 2.0 g/m², based on the layer (S),
in an electrolyser,
wherein the electrolyser comprises an electrode on which the porous transport layer (PTL) is applied, and wherein a bipolar plate is applied on the porous transport layer (PTL) .

2. Use according to Claim 1, wherein the bipolar plate is a bipolar plate (BP) having a layer (S)
- which comprises a component (K) selected from Ir, Ru, Rh, Os, their oxides, or mixtures thereof; and
- the loading in terms of the total amount of Ir, Ru, Rh and Os in metallic and oxidic form, based on Ir, Ru, Rh and Os, is less than 20.0 g/m², based on the layer (S) of the bipolar plate (BP).

3. Use according to either of the preceding claims, wherein the layer (S) is the outermost layer of the porous transport layer (PTL).

4. Use according to any of the preceding claims, wherein the total amount of Ir, Ru, Rh and Os in the layer (S) in metallic and oxidic form is at least 20 atom%, based on the total amount of metal atoms in the layer (S).

5. Use according to any of the preceding claims, wherein the layer (S) contains
- a total amount of 20 to 100 atom%, preferably 40 to 100 atom%, more preferably 70 to 100 atom% of Ir, Ru, Rh and Os in metallic and oxidic form; and
- a total amount of 0 to 80 atom%, preferably 0 to 60 atom%, more preferably 0 to 30 atom% of Ti, TiO₂, Ta, Ta₂O₅, Nb, Nb₂O₅, Zr, ZrO₂, Ni, NiO₂, Co, CoO₂, Si, SiO₂, Al, Al₂O₃, In, In₂O₃, Bi, Bi₂O₅, Sn, SnO₂ or mixtures thereof,
based in each case on the total amount of metal atoms in the layer (S).

6. Use according to any of the preceding claims, wherein the component (K) is selected from Ir, its oxides or mixtures thereof.

7. Use according to any of the preceding claims, wherein the layer (S) is used as an anti-corrosion layer.

## Revendications

1. Utilisation d'une couche de transport poreuse (PTL) présentant une couche (S),
- qui contient un composant (K) choisi parmi Ir, Ru, Rh, Os, leurs oxydes ou des mélanges de ceux-ci ; et
- la charge en quantité totale de Ir, Ru, Rh et Os sous forme métallique et oxydique par rapport à Ir, Ru, Rh et Os s'élève à 0,010 g/m² à 2,0 g/m² par rapport à la couche (S),
dans un électrolyseur,
dans laquelle l'électrolyseur contient une électrode sur laquelle est appliquée la couche de transport poreuse (PTL), et dans laquelle une plaque bipolaire est appliquée sur la couche de transport poreuse (PTL).

2. Utilisation selon la revendication 1, dans laquelle la plaque bipolaire est une plaque bipolaire (BP) présentant une couche (S),
- qui contient un composant (K) choisi parmi Ir, Ru, Rh, Os, leurs oxydes ou des mélanges de ceux-ci ; et
- la charge en quantité totale de Ir, Ru, Rh et Os sous forme métallique et oxydique par rapport à Ir, Ru, Rh et Os s'élève à moins de 20,0 g/m² par rapport à la couche (S) de la plaque bipolaire (BP).

3. Utilisation selon l'une des revendications précédentes, dans laquelle la couche (S) est la couche la plus extérieure de la couche de transport poreuse (PTL).

4. Utilisation selon l'une des revendications précédentes, dans laquelle la quantité totale de Ir, Ru, Rh et Os dans la couche (S) sous forme métallique et oxydique s'élève à au moins 20 % en atomes par rapport à la quantité totale d'atomes métalliques dans la couche (S).

5. Utilisation selon l'une des revendications précédentes, dans laquelle la couche (S) contient
- une quantité totale de 20 à 100 % en atomes, de préférence de 40 à 100 % en atomes, de manière plus fortement préférée de 70 à 100 % en atomes de Ir, Ru, Rh et Os sous forme métallique et oxydique ; et
- une quantité totale de 0 à 80 % en atomes, de préférence de 0 à 60 % en atomes, de manière plus fortement préférée de 0 à 30 % en atomes de Ti, TiO₂, Ta, Ta₂O₅, Nb, Nb₂O₅, Zr, ZrO₂, Ni, NiO₂, Co, CoO₂, Si, SiO₂, Al, Al₂O₃, In, In₂O₃, Bi, Bi₂O₅, Sn, SnO₂ ou des mélanges de ceux-ci,
respectivement par rapport à la quantité totale d'atomes métalliques dans la couche (S).

6. Utilisation selon l'une des revendications précédentes, dans laquelle le composant (K) est choisi parmi Ir, ses oxydes ou des mélanges de ceux-ci.

7. Utilisation selon l'une des revendications précédentes, dans laquelle la couche (S) est utilisée en tant que couche de protection contre la corrosion.
